# EUROPÄISCHE PATENTSCHRIFT

(11) **EP 0 755 370 B1**
(45) Veröffentlichungstag und Bekanntmachung des Hinweises auf die Patenterteilung: **05.07.2000**
(21) Anmeldenummer: 95915180.4
(22) Anmeldetag: 03.04.1995
(51) Int. Cl.: C05G 3/02, C05G 5/00, A01N 61/00, A01N 51/00, A01N 25/34, A01N 25/12

(54) **INSEKTIZIDE DÜNGEMISCHUNGEN**
INSECTICIDE FERTILISER MIXTURES
MELANGES D'ENGRAIS INSECTICIDES

(30) Priorität: 14.04.1994 DE 4412833
(43) Veröffentlichungstag der Anmeldung: 29.01.1997
(73) Patentinhaber: BAYER AG, 51368 Leverkusen (DE)
(72) Erfinder: SCHÜTTE, Manfred-Heinrich, D-50259 Pulheim (DE); BARON, Gerhard, D-51377 Leverkusen (DE)
(86) Internationale Anmeldenummer: EP9501222
(87) Internationale Veröffentlichungsnummer: WO9528370

(56) Entgegenhaltungen:
- EP-A- 0 555 931
- CH-A- 82 740
- CH-A- 116 534
- DD-A- 235 020
- DE-A- 3 247 918
- DE-A- 3 821 790
- CHEMICAL ABSTRACTS, vol. 113, no. 7, 13.August 1990 Columbus, Ohio, US; abstract no. 58019f, & JP-A-02 038 393 (KURARAY CO., LTD) & PATENT ABSTRACTS OF JAPAN vol. 14 no. 197 (C-712) [4140] & JP,A,02 038393 (KURARAY CO LTD)
- CHEMICAL ABSTRACTS, vol. 112, no. 11, 12.März 1990 Columbus, Ohio, US; abstract no. 97574g, & JP-A-01 157 492 (TAKEDA CHEMICAL INDUSTRIES, LTD & MITSUBISHI KASEI CORP.)
- BRIGHTON CROP PROTECTION CONFERENCE-PESTS AND DISEASES, Nr. 1, 1990 THORNTON HEATH, GB; , Seiten 21-28, A.ELEBRT ET AL. 'Imidacloprid, a Novel Nitromethylene Analohue Insecticide for Crop Protection'
- PFLANZENSCHUTZ-NACHRICHTEN BAYER, Bd. 44, Nr. 2, 1991 LEVERKUSEN,DE;, Seiten 113-136, A.ELBERT ET AL. 'Imidacloprid-a new systemic insecticide'
- CHEMICAL ABSTRACTS, vol. 91, no. 1, 2.Juli 1979 Columbus, Ohio, US; abstract no. 1323y, S.W. JONES ET AL. 'Interaction of insecticides with acetylcholine receptors' & NEUROTOXICOL. INSECTIC. PHEROMONES, [PROC. SYMP.] 1978, PUBL., 1979 NEW YORK, US;, Seiten 259-275,
- CHEMICAL ABSTRACTS, vol. 91, no. 9, 27.August 1979 Columbus, Ohio, US; abstract no. 69959r, R.D. O'BRIEN 'The interaction of pesticides with gates, receptors and enzymes of the nervous system' & ADV. PESTIC. SCI., PLENARY LECT. SYMP. PAP. INT. CONGR. PESTIC. CHEM. 4TH. 1978, PUBL., 1979 OXFORD, GB;, Seiten 449-457,

## Beschreibung

Die vorliegende Erfindung betrifft insektizide Düngemischungen enthaltend eine Düngekomponente, ein Nitromethylen oder damit verwandten Verbindungen und ein Klebemittel.

Agonisten oder Antagonisten der nicotinergen Acetylcholinrezeptoren von Insekten, zu denen die Nitromethylene und damit verwandte Verbindungen gehören, sind bekannt, z.B. aus den folgenden Publikationen:

Europäische Offenlegungsschriften Nr. 464 830, 428 941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Auf die in diesen Publikationen beschriebenen Methoden, Verfahren, Formeln und Definitionen sowie auf die darin beschriebenen einzelnen Präparationen und Verbindungen wird hiermit ausdrücklich Bezug genommen.

Es ist bekannt, Dünger bei Zierpflanzen im Haushalt in Form von Düngestäbchen anzuwenden.

Es ist auch bekannt, Insektizide bei Zierpflanzen im Haushalt in Form imprägnierter Kartonstreifen, die in das Nährsubstrat der Pflanze gedrückt werden, anzuwenden.

Es ist ebenfalls für die Zierpflanzenhaltung im Haushalt eine Tablette bekannt, die als insektiziden Wirkstoff Dimethoat und als Trägermaterial Düngemittel enthält. Die Wirkung dieser Mischung ist jedoch nicht voll befriedigend.

Gegenstand der vorliegenden Erfindung sind:
1. Formstabile Mischungen enthaltend mindestens eine Verbindung der allgemeinen Formel (I) 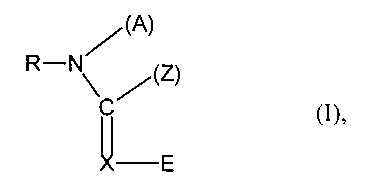 in welcher
   - R: für Wasserstoff, gegebenenfalls substituierte Reste der Gruppe Acyl, Alkyl, Aryl, Aralkyl, Heteroaryl oder Heteroarylalkyl steht;
   - A: für eine monofunktionelle Gruppe aus der Reihe Wasserstoff, Acyl, Alkyl, Aryl steht oder für eine bifunktionelle Gruppe steht, die mit dem Rest Z verknüpft ist;
   - E: für einen elektronenziehenden Rest steht;
   - X: für die Reste -CH= oder =N- steht, wobei der Rest -CH= anstelle eines H-Atoms mit dem Rest Z verknüpft sein kann;
   - Z: für eine monofunktionelle Gruppe aus der Reihe Alkyl, -O-R, -S-R, 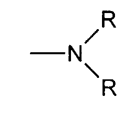 steht oder für eine bifunktionelle Gruppe steht, die mit dem Rest A oder dem Rest X verknüpft ist,
   Düngemittel, Klebemittel und gegebenenfalls Hilfs- und Trägerstoffe in Form von Stäbchen, Platten, Tabletten oder Granulaten.
2. Verfahren zur Steigerung der Wirkung von Verbindungen der allgemeinen Formel (I), dadurch gekennzeichnet, daß man sie in Form formstabiler Mischungen mit Düngemitteln, Klebemitteln sowie gegebenenfalls Hilfs- und Trägerstoffen einsetzt.
3. Verfahren zur Herstellung formstabiler Mischungen enhaltend mindestens eine Verbindung der allgemeinen Formel (I) und Düngemittel, dadurch gekennzeichnet, daß man sie mit Klebstoffen sowie gegebenenfalls Hilfs- und Trägerstoffen vermischt und in die gewünschte Form preßt oder extrudiert.
4. Verwendung formstabiler Mischungen enthaltend mindestens eine Verbindung der allgemeinen Formel (I), Düngemittel, Klebemittel und gegebenenfalls Hilfs- und Trägerstoffen zum langanhaltenden Schutz von Pflanzen vor Insektenschäden, indem man diese Mischungen in das Nährmedium der Pflanzen einbringt.

Die insektizide Wirkung der Verbindung der allgeminen Formel (I) in den erfindungsgemäßen Mischungen setzt schneller ein und ist länger anhaltend im Vergleich zu den üblichen düngemittelfreien Granulaten. Die erfindungsgemäßen Mischungen lassen sich gerade im Hobbygartenbau einfach und problemlos einsetzen.

Besonders bevorzugt sind Verbindungen der Formel (I), in welcher die Reste folgende Bedeutung haben:
- R: steht für Wasserstoff sowie für gegebenenfalls substituierte Reste aus der Reihe Acyl, Alkyl, Aryl, Aralkyl, Heteroaryl, Heteroarylalkyl.

Als Acylreste seien genannt Formyl, Alkylcarbonyl, Arylcarbonyl, Alkylsulfonyl, Arylsulfonyl, (Alkyl-)-(Aryl-)-phosphoryl, die ihrerseits substituiert sein können.

Als Alkyl seien genannt C₁₋₁₀-Alkyl, insbesondere C₁₋₄-Alkyl, im einzelnen Methyl, Ethyl, i-Propyl, sec.- oder t.-Butyl, die ihrerseits substituiert sein können.

Als Aryl seien genannt Phenyl, Naphthyl, insbesondere Phenyl.

Als Aralkyl seien genannt Phenylmethyl, Phenethyl.

Als Heteroaryl seien genannt Heteroaryl mit bis zu 10 Ringatomen und N, O, S insbesondere N als Heteroatomen. Im einzelnen seien genannt Thiophenyl, Furyl, Thiazolyl, Imidazolyl, Pyridyl, Benzthiazolyl.

Als Heteroarylalkyl seien genannt Heteroarylmethyl, Heteroarylethyl mit bis zu 6 Ringatomen und N, O, S, insbesondere N als Heteroatomen.

Als Substituenten seien beispielhaft und vorzugsweise aufgeführt: Alkyl mit vorzugsweise 1 bis 4, insbesondere 1 oder 2 Kohlenstoffatomen, wie Methyl, Ethyl, n- und i-Propyl und n-, i- und t-Butyl; Alkoxy mit vorzugsweise 1 bis 4, insbesondere 1 oder 2 Kohlenstoffatomen, wie Methoxy, Ethoxy, n- und i-Propyloxy und n-, i- und t-Butyloxy; Alkylthio mit vorzugsweise 1 bis 4, insbesondere 1 oder 2 Kohlenstoffatomen, wie Methylthio, Ethylthio, n- und i-Propylthio und n-, i- und t-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Hydroxy; Halogen, vorzugsweise Fluor, Chlor, Brom und Jod, insbesondere Fluor, Chlor und Brom; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethyl-amino, n- und i-Propylamino und Methyl-n-butylamino; Carboxyl; Carbalkoxy mit vorzugsweise 2 bis 4, insbesondere 2 oder 3 Kohlenstoffatomen, wie Carbomethoxy und Carboethoxy; Sulfo (-SO₃H); Alkylsulfonyl mit vorzugsweise 1 bis 4, insbesondere 1 oder 2 Kohlenstoffatomen, wie Methylsulfonyl und Ethylsulfonyl; Arylsulfonyl mit vorzugsweise 6 oder 10 Arylkohlenstoffatomen, wie Phenylsulfonyl sowie Heteroarylamino und Heteroarylalkylamino wie Chlorpyridylamino und Chlorpyridylmethylamino.
- A: steht besonders bevorzugt für Wasserstoff sowie für gegebenenfalls substituierte Reste aus der Reihe Acyl, Alkyl, Aryl, die bevorzugt die bei R angegebenen Bedeutungen haben. A steht ferner für eine bifunktionelle Gruppe. Genannt sei gegebenenfalls substituiertes Alkylen mit 1-4, insbesondere 1-2 C-Atomen, wobei als Substituenten die weiter oben aufgezählten Substituenten genannt seien und wobei die Alkylengruppen durch Heteroatome aus der Reihe N, O, S unterbrochen sein können.
- A und Z: können gemeinsam mit den Atomen, an welche sie gebunden sind, einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei Alkyl der N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.
Als Beispiele für den heterocyclischen Ring seien Pyrrolidin, Piperidin, Piperazin, Hexamethylenimin, Hexahydro-1,3,5-triazin, Morpholin genannt, die gegebenenfalls bevorzugt durch Methyl substituiert sein können.
- E: steht für einen elektronentziehenden Rest, wobei insbesondere NO₂, CN, Halogenalkylcarbonyl wie 1,5-Halogen-C₁₋₄-carbonyl, insbesondere COCF₃ genannt seien.
- X: steht für -CH= oder -N=
- Z: steht für gegebenenfalls substituierte Reste Alkyl, -OR, -SR, -NRR, wobei R und die Substituenten bevorzugt die oben angegebene Bedeutung haben.
- Z: kann außer dem obengenannten Ring gemeinsam mit dem Atom, an welches es gebunden ist und dem Rest 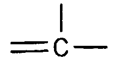 an der Stelle von X einen gesättigten oder ungesättigten heterocyclischen Ring bilden. Der heterocyclische Ring kann weitere 1 oder 2 gleiche oder verschiedene Heteroatome und/oder Heterogruppen enthalten. Als Heteroatome stehen vorzugsweise Sauerstoff, Schwefel oder Stickstoff und als Heterogruppen N-Alkyl, wobei die Alkyl oder N-Alkyl-Gruppe vorzugsweise 1 bis 4, insbesondere 1 oder 2 Kohlenstoffatome enthält. Als Alkyl seien Methyl, Ethyl, n- und i-Propyl und n-, i- und t-Butyl genannt. Der heterocyclische Ring enthält 5 bis 7, vorzugsweise 5 oder 6 Ringglieder.
Als Beispiele für den heterocyclischen Ring seien Pyrrolidin, Piperidin, Piperazin, Hexamethylenimin, Morpholin und N-Methylpiperazin genannt.

Als ganz besonders bevorzugt erfindungsgemäß verwendbare Verbindungen seien Verbindungen der allgemeinen Formeln (II) und (III) genannt: 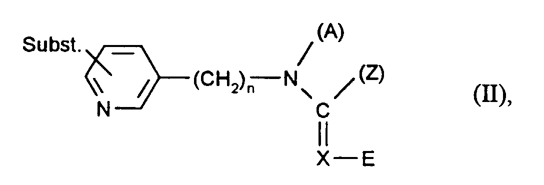 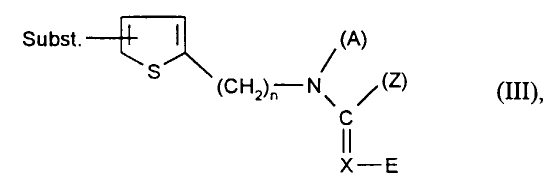 in welchen
- n: für 1 oder 2 steht,
- Subst.: für einen der oben aufgeführten Substituenten, insbesonders für Halogen, ganz besonders für Chlor steht,
- A, Z, X und E: die oben angegebenen Bedeutungen haben.

Im einzelnen seien folgende Verbindungen genannt:

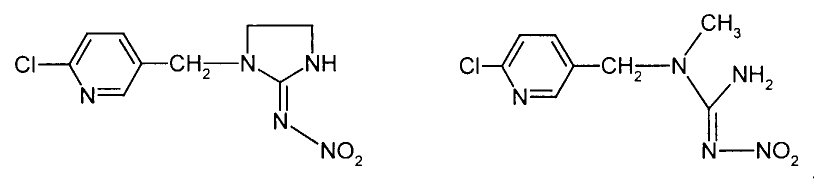

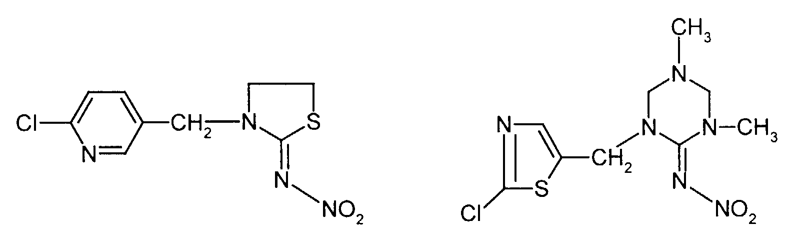

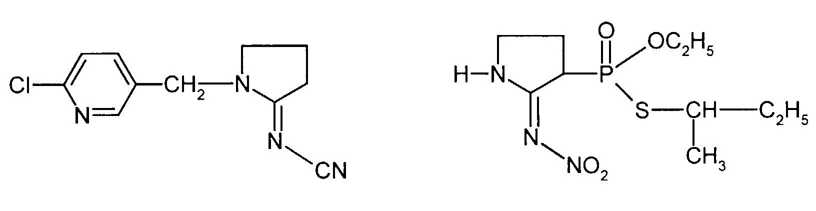

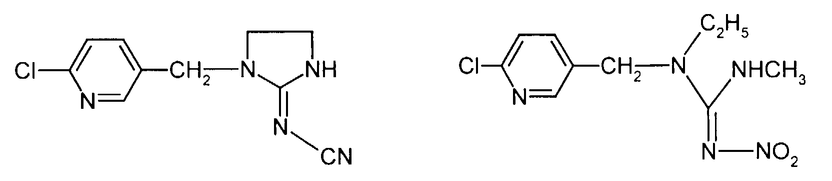

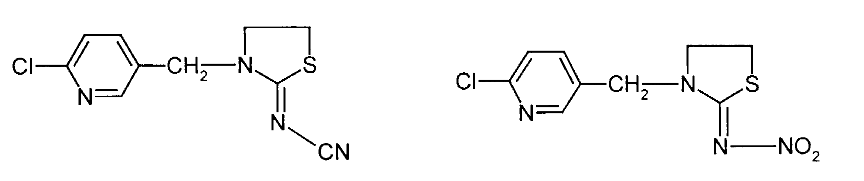

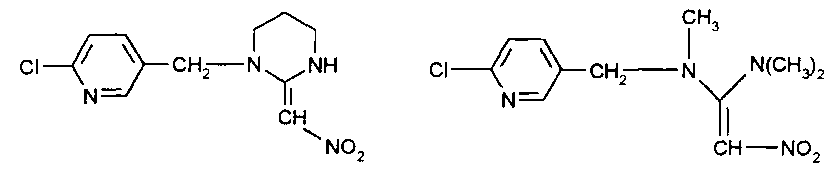

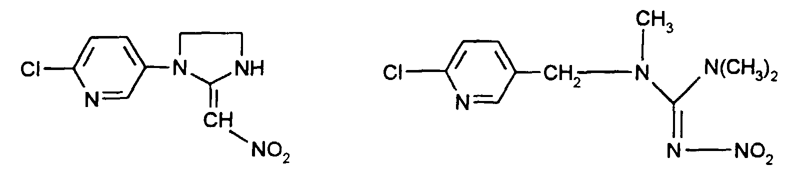

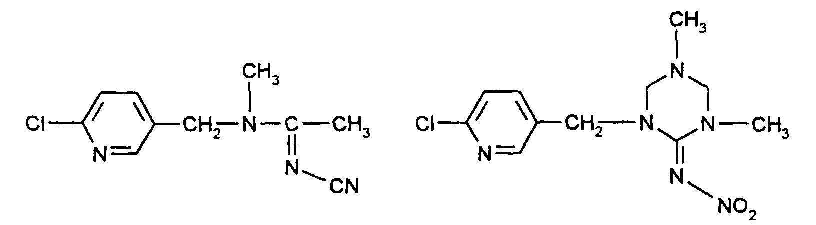

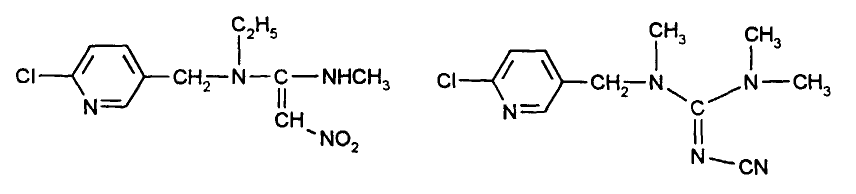

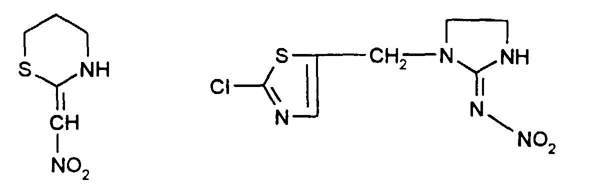

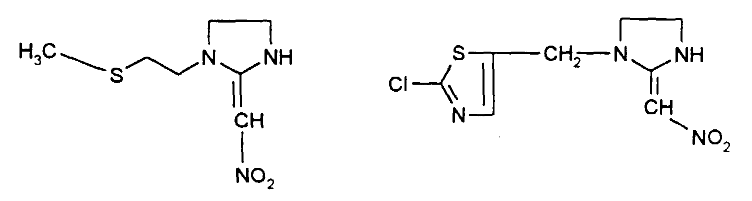

Die Wirkstoffgehalte liegen zwischen 0,01 bis 10 %, insbesondere zwischen 0,1 bis 2,5 %.

Als Düngemittelkomponente können verwendet werden organische und anorganische stickstoffhaltige Verbindungen wie Harnstoff, Harnstoff-Formaldehyd Kondensationsprodukte, Aminosäuren, Ammoniumsalze und Nitrate, ferner Kaliumsalze (bevorzugt Chloride, Sulfate, Nitrate) und Phosphorsäure bzw. Salze der Phosphorsäure (bevorzugt Kaliumsalze und Ammoniumsalze). Des weiteren können die Dünger Salze von Mikronährstoffen (bevorzugt Mangan, Magnesium, Eisen, Bor, Kupfer, Zink, Molybdan und Kobalt) sowie Pflanzenhormone enthalten (z.B. Vitamin B1 und Indol-III-Essigsäure). Bevorzugt eingesetzt werden die handelsüblichen Volldünger.

Die Hauptdüngerbestandteile Stickstoff, Kalium und Phosphor können in weiten Grenzen variiert werden. Üblicherweise werden Gehalte von 1 bis 30 % Stickstoff (bevorzugt 5 bis 20 %), 1 bis 20 % Kalium (bevorzugt 3 bis 15 %) und 1 bis 20 % Phosphor (bevorzugt 3 bis 10 %) verwendet. Die Mikroelementgehalte liegen meist im ppm Bereich, bevorzugt 1 bis 1000 ppm.

Als Klebemittel seien genannt Haftmittel wie Carboxymethylcellulose, natürliche und synthetische pulverige, körnige oder latexförmige Polymere, Polyvinylpyrrolidon, Vinylpyrrolidon-Styrol-Copolymere, Vinylpyrrolidon-Vinylacetat-Copolymere, Polyethylenglycol oder anorganische Klebemittel wie Gips oder Zement. Sie liegen in der Mischung in Konzentrationen von 1 bis 30 Gew.-%, bevorzugt von 2 bis 20 Gew.-% vor.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, außerdem Calciumphosphat bzw. Calciumhydrogenphosphat. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel.

Weitere Hilfsstoffe zur Herstellung der erfindungsgemäßen Mischungen sind Sprengmittel und Tenside.

Sprengmittel werden eingesetzt, um die Wirkstofffreigabe in Erdreichen zu fördern. Verwendung finden einzeln oder in Kombination Maisstärke, vernetztes Polyvinylpyrrolidon und spezielle Zellulosen. Die Sprengmittel liegen in Kozentrationen von 1 bis 20 Gew.-%, bevorzugt 3 bis 10 % Gew.-%, vor.

Tenside werden eingesetzt, um die bioligische Wirksamkeit des Wirkstoffs durch Solubilisieren zu verbessern, ihr Gehalt liegt zwischen 1 bis 10 Gew.-%, bevorzugt 2 bis 5 Gew.-%. Geeignet sind nichtionische Tenside vom Typ Alkyl-Arylethoxylate.

Die Mischungen aus Wirkstoff, Düngemitteln, Klebemittel, Hilfsmittel und Inertstoffen werden intensiv vermischt und über einen Extruder in Stäbchen von 3 bis 10 mm Durchmesser, bevorzugt 6 bis 8 mm und 1 bis 10 cm Länge, bevorzugt 3 bis 6 cm, verpreßt. Alternativ kann die Mischung auch über eine Tablettenpresse in die gewünschte Stäbchenform gebracht werden. Es ist auch möglich, zunächst wirkstofffreie Stäbchen oder Tabletten herzustellen und diese im zweiten Schritt mit einer Lösung des Wirkstoffs zu überziehen. Dieses nachträgliche "Coaten" ist auch vorteilhaft anwendbar zum Wirkstoffauftrag auf Düngergranulate.

### Beispiele

Eine Mischung aus
1.

| | |
|---|---|
| | 0,25 % Imidacloprid |
| | 2,40 % Pyrrolidon-Styrol-Copolymerisat |
| | 2,30 % Tristyrylphenyl-16-ethoxylat |
| | 0,80 % Talkum A |
| | 5,00 % Maisstärke |
| | 38,00 % Volldünger Triabon (BASF) |
| | 40,00 % Kaolin |
| ca. | 11,00 % Wasser |

wird in einem Kneter gründlich vermischt und anschließend in einem Extruder zu ca. 6 mm Durchmesser Stäbchen verpreßt, die auf ca. 4 cm Länge geschnitten werden. Nach dem Trocknen (40°C, 6 Stunden) haben die Stäbchen die gewünschte Festigkeit.
2.

| | |
|---|---|
| | 2,5 % Imidacloprid |
| | 4,8 % Pyrrolidon-Styrol-Copolymerisat |
| | 2,3 % Tristyrylphenyl-16-ethoxylat |
| | 0,8 % Talkum |
| | 5,0 % Maisstärke |
| | 36,0 % Volldünger Nitrophoska-permanent |
| | 38,0 % Kaolin |
| ca. | 11,0 % Wasser |

Herstellung wie Beispiel 1.
3. Eine Mischung wie Beispiel 1 bzw. 2 wird ohne Wasser in einer Tablettenpresse in die gewünschte Form gebracht
4. Die Volldünger Triabon bzw. Nitrophoska-permanent werden in handelsüblicher, granulierter Form, in einem Freifallmischer mit einer Lösung von Imidocloprid in Aceton besprüht und getrocknet. Der Wirkstoff befindet sich auf der Granulatoberfläche.

Die erfindungsgemäßen Düngemischungen eignen sich zur Bekämpfung von Insekten, die im Gartenbau, in der Landwirtschaft und in Forsten vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porecellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Mallophaga z.B. Trichodectes spp., Damalinea spp..

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp..

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp..

Aus der Ordnung der Lepidoptera z.B. Pectinophora gossypiella, Bupalus piniarius, Cheimatobia brumata, Lithocolletis blancardella, Hyponomeuta padella, Plutella maculipennis, malacosoma neustria, Euproctis chrysorrhoea, Lymantria spp., Bucculatrix thurberiella, Phyllocnistis citrella, Agrotis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus pp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp..

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tanaus spp., Tannia spp., Bibio hortulanus, Oscinella frit, Phorbia spp., Pegomyia hyoscyami, Ceratitis capitata, Dacus oleae, Tipula paludosa.

Bevorzugt hervorzuheben sei die Wirkung gegen Blattläuse und weiße Fliege im Erwerbsgartenbau und Hobbygartenbau.

Die erfindungsgemäßen Formkörper werden in einer Dosis angewendet, so daß pro Liter behandelter Erde oder Nährmedium ca. 1 bis 2000 mg Wirkstoff, bevorzugt 1 bis 100 mg Wirkstoff, besonders bevorzugt 1 bis 50 mg Wirkstoff, eingesetzt werden.

### Beispiel

Je 10 Pflanzen Weihnachtsstern, die stark mit weißer Fliege befallen waren, wurden mit verschiedenen Formulierungen des Wirkstoffs Imidacloprid behandelt. Die Wirkung wurde 18 bis 70 Tage nach der Behandlung beobachtet. Folgende Behandlungen werden durchgeführt:
A: Imidacloprid-Granulat 5 % in einer Dosis von 50 mg/l Erde wurde in die Oberfläche der Pflanzerde eingearbeitet.
B: Imidacloprid-Granulat 5 % in einer Dosis von 25 mg/l Erde wurde in die Oberfläche der Pflanzerde eingearbeitet.
C: Imidacloprid-Granulat 5 % in einer Dosis von 5 mg/l Erde wurde in die Oberfläche der Pflanzerde eingearbeitet.
D: Stäbchen aus Triabon mit 2,5 % Imidacloprid der Zusammensetzung 1 (oben) wurden in einer Dosis von 50 mg/l Erde in die Pflanzerde gesteckt.
E: Stäbchen aus Triabon mit 2,5 % Imidacloprid der Zusammensetzung 1 (oben) wurden in einer Dosis von 25 mg/l Erde in die Pflanzerde gesteckt.
F: Stäbchen aus Triabon mit 2,5 % Imidacloprid der Zusammensetzung 1 (oben) wurden in einer Dosis von 5 mg/l Erde in die Pflanzerde gesteckt.

Es wurden folgende Ergebnisse erzielt:

| Behandlung | Ergebnis nach Tagen in % Wirkung im Vergleich zur unbehandelten Kontrolle | | | | | |
|---|---|---|---|---|---|---|
| | 18 | 22 | 28 | 42 | 49 | 70 |
| A | 22 | 85 | 100 | 100 | 100 | 100 |
| B | 14 | 76 | 100 | 100 | 100 | 100 |
| C | 13 | 56 | 60 | 75 | 79 | 95 |
| D | 9 | 78 | 100 | 100 | 100 | 100 |
| E | 4 | 64 | 100 | 100 | 100 | 100 |
| F | 0 | 52 | 98 | 100 | 100 | 100 |

100 % bedeutet volle Wirkung, 0 % bedeutet keine Wirkung.

## Patentansprüche

1. Formstabile Mischungen enthaltend mindestens eine Verbindung der Formel (I) 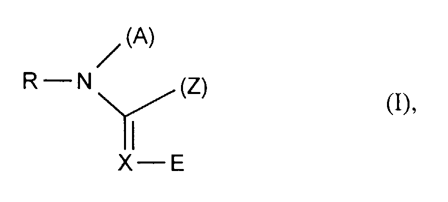 in welcher
R für Wasserstoff, gegebenenfalls substituierte Reste der Gruppe Acyl, Alkyl, Aryl, Aralkyl, Heteroaryl oder Heteroarylalkyl steht;
A für eine monofunktionelle Gruppe aus der Reihe Wasserstoff, Acyl, Alkyl, Aryl steht oder für eine bifunktionelle Gruppe steht, die mit dem Rest Z verknüpft ist;
E für einen elektronenziehenden Rest steht;
X für die Reste -CH= oder =N- steht, wobei der Rest -CH= anstelle eines H-Atoms mit dem Rest Z verknüpft sein kann;
Z für eine monofunktionelle Gruppe aus der Reihe Alkyl, -O-R, -S-R, 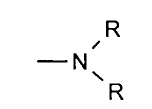 steht oder für eine bifunktionelle Gruppe steht, die mit dem Rest A und dem Rest X verknüpft ist,
Düngemittel, Klebemittel und gegebenenfalls Hilfs- und Trägerstoffe in Form von Stäbchen, Platten, Tabletten oder Granulaten.

2. Formstabile Mischungen gemäß Anspruch 1 enthaltend mindestens eine Verbindung der Formeln 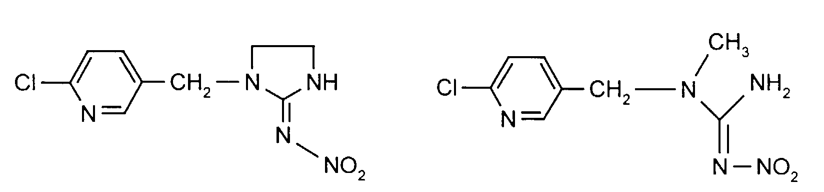 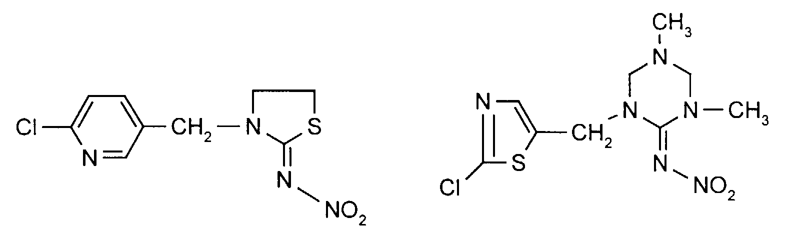 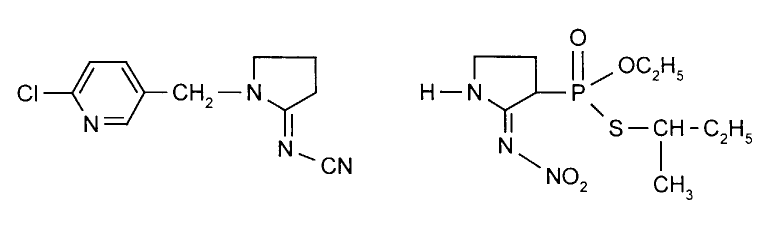 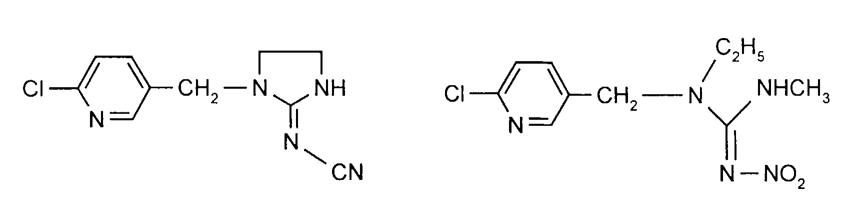 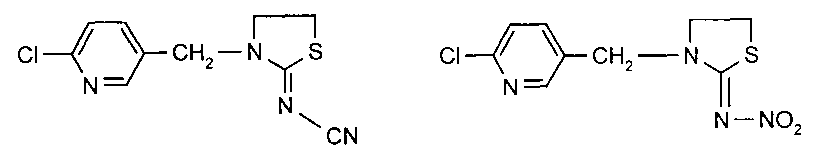 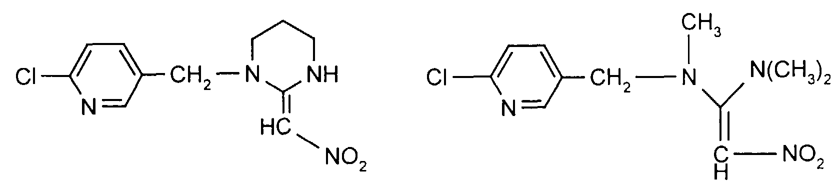 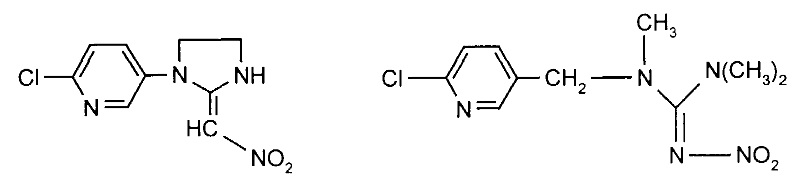 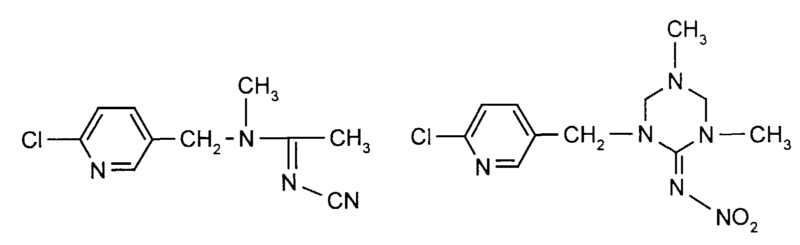 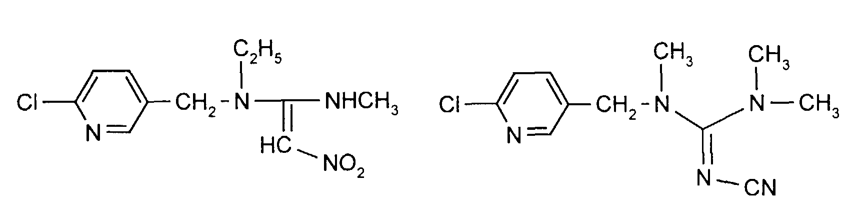 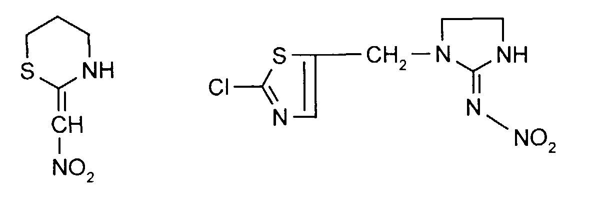 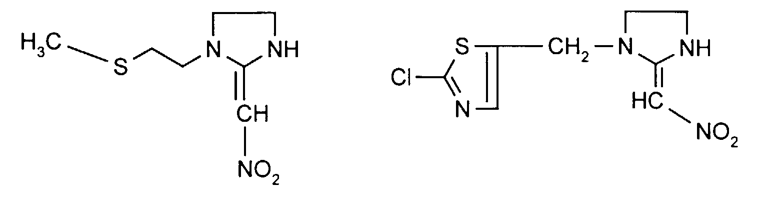 Düngemittel, Klebemittel und gegebenenfalls Hilfs- und Trägerstoffe in Form von Stäbchen, Platten, Tabletten oder Granulaten.

3. Formstabile Mischungen gemäß Anspruch 3, dadurch gekennzeichnet, daß sie als Verbindung der Formel (I) 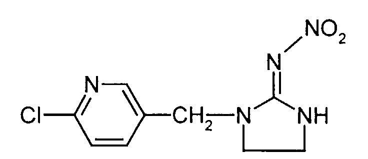 enthalten.

4. Formstabile Mischungen gemäß Anspruch 3, dadurch gekennzeichnet, daß sie als Verbindung der Formel (I) 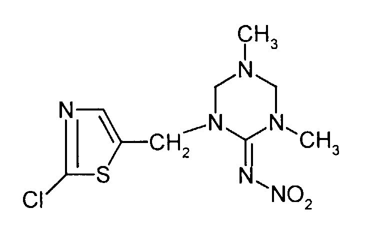 enthalten.

5. Verfahren zur Herstellung formstabiler Mischungen gemäß einem der Ansprüche 1 bis 5, dadurch gekennzeichnet, daß man mindestens eine Verbindung der Formel (I) gemäß einem der Ansprüche 1 bis 5 mit Düngemitteln, Klebstoffen und gegebenenfalls Hilfs- und Trägerstoffen vermischt und in die gewünschte Form preßt oder extrudiert.

6. Verwendung formstabiler Mischungen gemäß einem der Ansprüche 1 bis 5 zum Schutz von Pflanzen vor Insektenschäden, indem man diese Mischungen in das Nährmedium der Pflanzen einbringt.

7. Stäbchen, erhältlich, indem man
| | |
|---|---|
| | 0,25 % Imidacloprid |
| | 2,40 % Pyrrolidon-Styrol-Copolymerisat |
| | 2,30 % Tristyrylphenyl-16-ethoxylat |
| | 0,80 % Talkum A |
| | 5,00 % Maisstärke |
| | 38,00 % Volldünger Triabon (BASF) |
| | 40,00 % Kaolin und |
| ca. | 11,00 % Wasser |
in einem Kneter gründlich vermischt und anschließend in einem Extruder zu ca. 6 mm Durchmesser Stäbchen verpreßt, die auf ca. 4 cm Länge geschnitten und 6 h bei 40°C getrocknet werden.

8. Verwendung von Stäbchen gemäß Anspruch 8 zum langanhaltenden Schutz von Pflanzen vor Insektenschäden.

## Claims

1. Dimensionally stable mixtures comprising at least one compound of the formula (I) 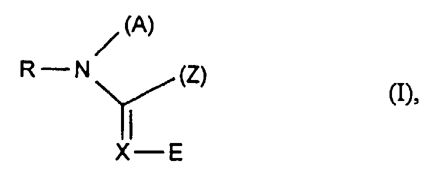 in which
R represents hydrogen or optionally substituted radicals from the group acyl, alkyl, aryl, aralkyl, heteroaryl or heteroarylalkyl;
A represents a monofunctional group from the series hydrogen, acyl, alkyl, aryl or represents a bifunctional group which is linked to the radical Z;
E represents an electron-withdrawing radical;
X represents the radicals -CH= or =N-, it being possible for the radical -CH= to be linked to the radical Z instead of one H atom;
Z represents a monofunctional group from the series alkyl, -O-R, -S-R, 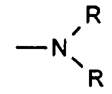 or represents a bifunctional group which is linked to the radical A and to the radical X,
fertilizers, adhesives and optionally auxiliaries and carrier materials in the form of rodlets, plates, tablets or granules.

2. Dimensionally stable mixtures according to Claim 1 comprising at least one compound of the formulae 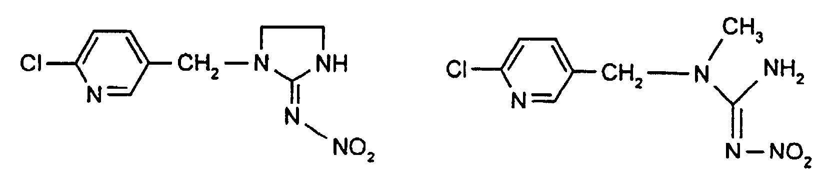 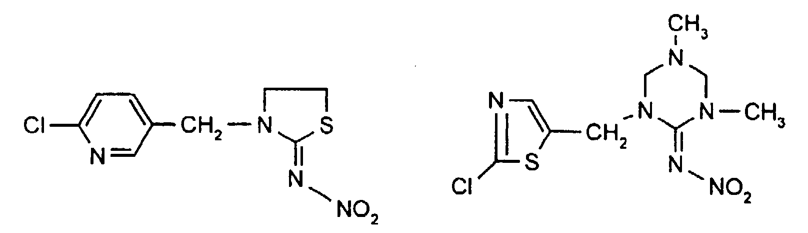 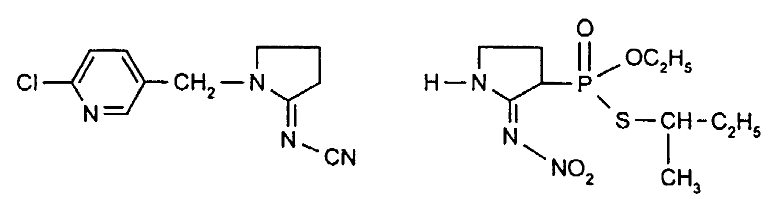 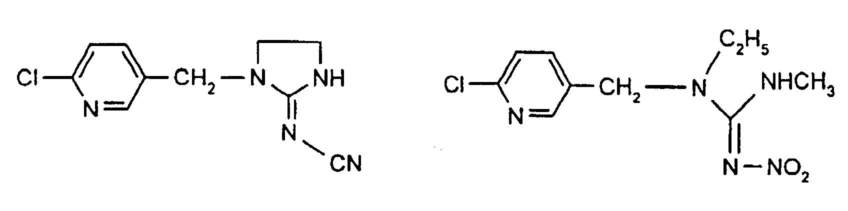 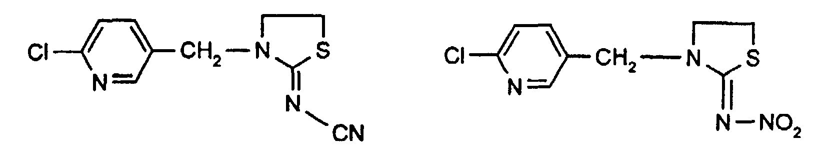 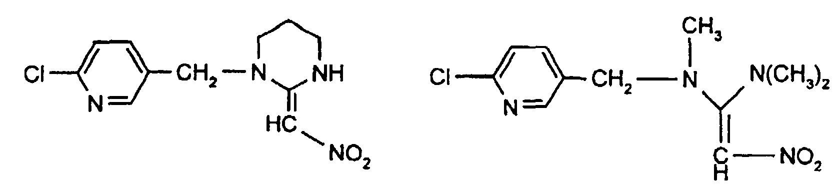 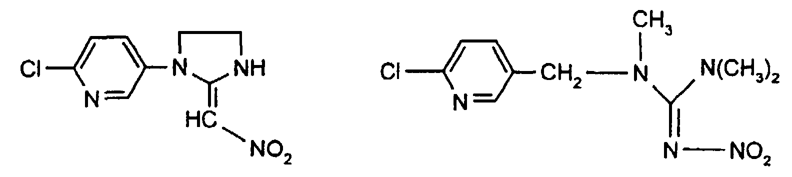 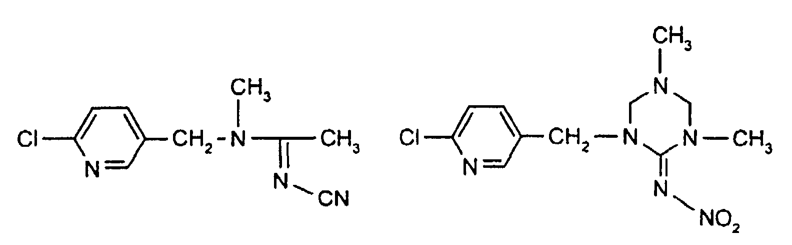 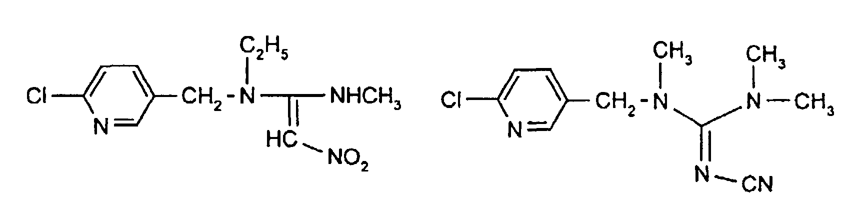 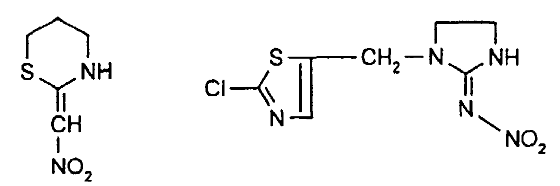 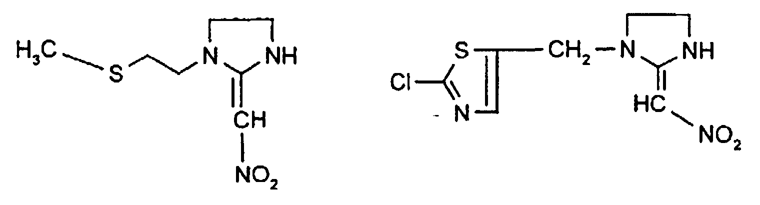 fertilizers, adhesives and optionally auxiliaries and carrier materials in the form of rodlets, plates, tablets or granules.

3. Dimensionally stable mixtures according to Claim 2, characterized in that they comprise 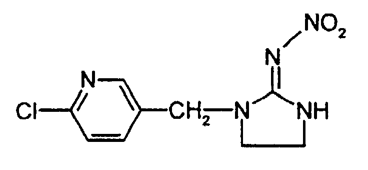 as compound of the formula (I).

4. Dimensionally stable mixtures according to Claim 2, characterized in that they comprise 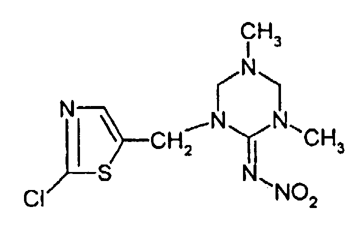 as compound of the formula (I).

5. Process for preparing dimensionally stable mixtures according to one of Claims 1 to 4, characterized in that at least one compound of the formula (I) according to one of Claims 1 to 4 is mixed with fertilizers, adhesives and optionally auxiliaries and carrier materials and the mixture is extruded or moulded to the desired form.

6. Use of dimensionally stable mixtures according to one of Claims 1 to 4 for protecting plants against insect damage, by incorporating these mixtures into the nutrient medium of the plants.

7. Rodlets obtainable by thoroughly mixing
| | |
|---|---|
| | 0.25% imidacloprid |
| | 2.40% pyrrolidone-styrene copolymer |
| | 2.30% tristyrylphenyl 16-ethoxylate |
| | 0.80% talc A |
| | 5.00% corn starch |
| | 38.00% Triabon complete fertilizer (BASF) |
| | 40.00% kaolin and |
| about | 11.00% water |
in a kneading apparatus and then compressing this mixture in an extruder to give rodlets with a diameter of about 6 mm which are cut to a length of about 4 cm and dried at 40°C for 6 h.

8. Use of rodlets according to Claim 7 for the long-term protection of plants against insect damage.

## Revendications

1. Mélanges indéformables contenant au moins un composé de formule (I) 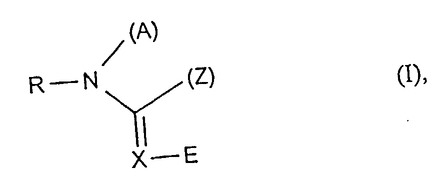 dans laquelle
R représente l'hydrogène, des restes éventuellement substitués du groupe acyle, alkyle, aryle, aralkyle, hétéroaryle ou hétéroaryl-alkyle ;
A est un groupe monofonctionnel de la série hydrogène, acyle, alkyle, aryle ou un groupe bifonctionnel qui est lié au reste Z ;
E représente un reste attirant les électrons ;
X représente les restes -CH= ou =N-, le reste -CH= pouvant être lié au reste Z au lieu d'être lié à un atome H ;
Z représente un groupe monofonctionnel de la série alkyle, -O-R, -S-R, 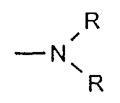 ou représente un groupe bifonctionnel qui est lié au reste A et au reste X,
des engrais, des adhésifs et, le cas échéant, des substances auxiliaires et des supports, sous forme de bâtonnets, plaques, tablettes ou granulés.

2. Mélanges indéformables suivant la revendication 1, contenant au moins l'un des composés de formules 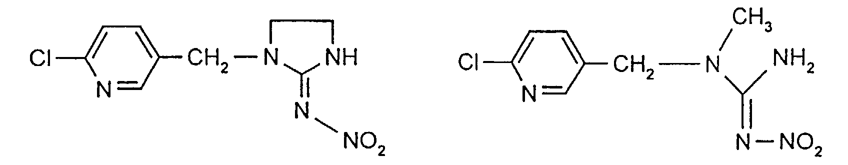 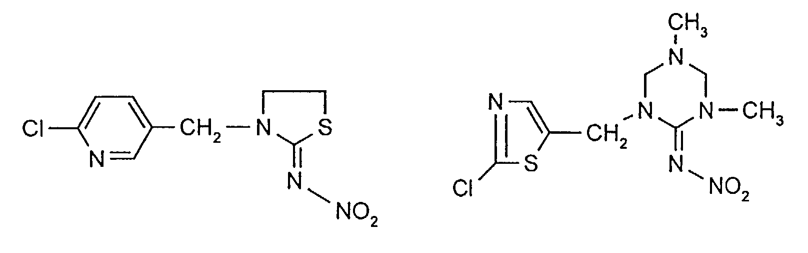 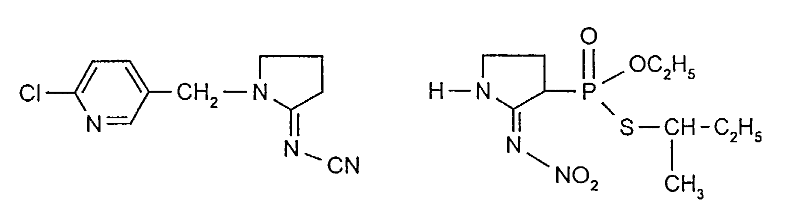 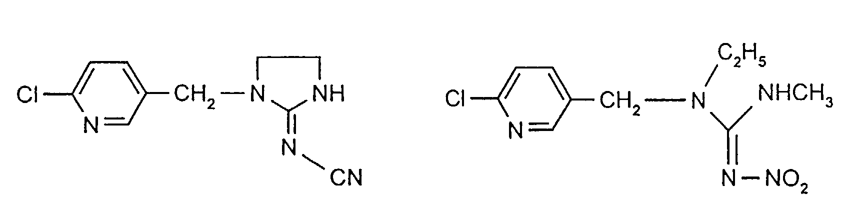 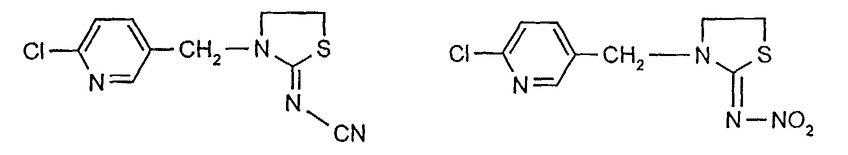 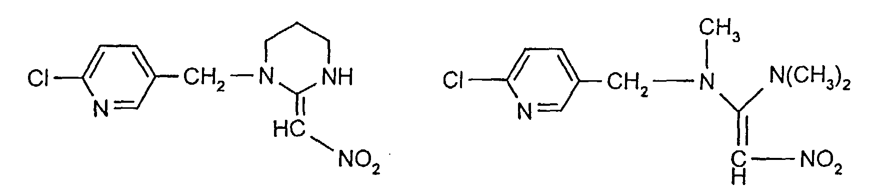 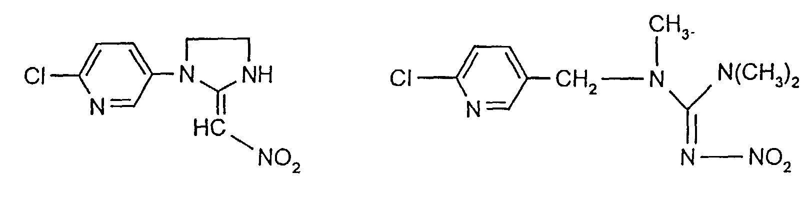 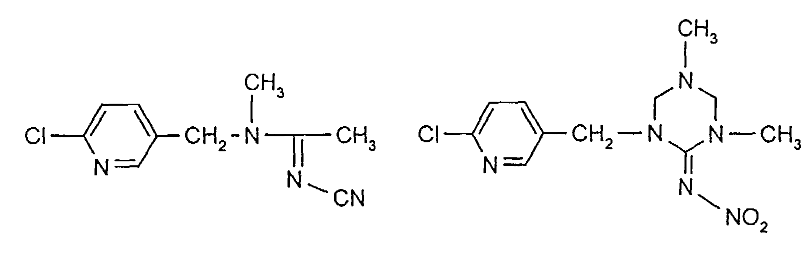 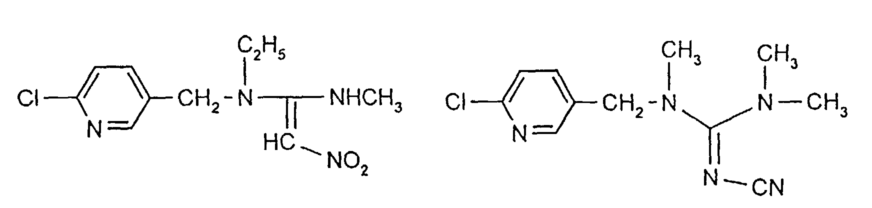 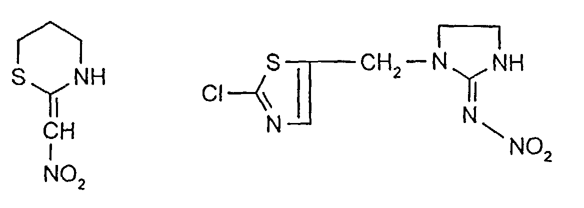 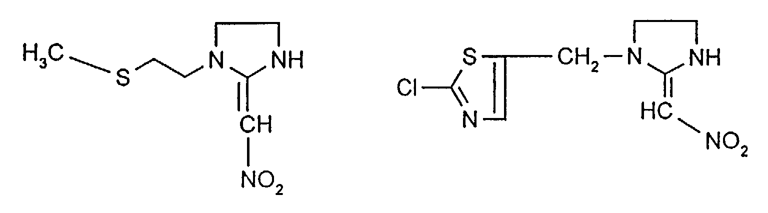 des engrais, des adhésifs et, le cas échéant, des substances auxiliaires et des supports, sous forme de bâtonnets, plaques, tablettes ou granulés.

3. Mélanges indéformables suivant la revendication 3, caractérisés en ce qu'ils contiennent 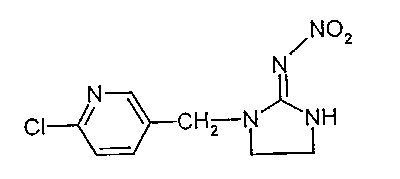 comme composé de formule (I).

4. Mélanges indéformables suivant la revendication 3, caractérisés en ce qu'ils contiennent 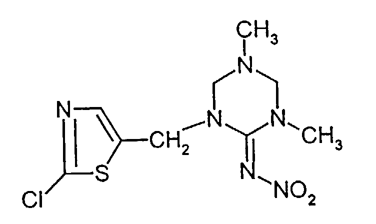 comme composé de formule (I).

5. Procédé de production de mélanges indéformables suivant l'une des revendications 1 à 5, caractérisé en ce qu'on mélange au moins un composé de formule (I) suivant l'une des revendications 1 à 5 avec des engrais, des adhésifs et, le cas échéant, des substances auxiliaires et des supports et on fait prendre aux mélanges la forme voulue par pressage ou extrusion.

6. Utilisation de mélanges indéformables suivant l'une des revendications 1 à 5 pour protéger des plantes des dégâts causés par les insectes, par l'introduction de ces mélanges dans le milieu nourricier des plantes.

7. Bâtonnets obtenus par le fait qu'on mélange intimement
| | |
|---|---|
| | 0,25 % d'imidaclopride |
| | 2,40 % de copolymère pyrrolidone-styrène |
| | 2,30 % de 16-éthoxylate de tristyrylphényle |
| | 0,80 % de talc A |
| | 5,00 % d'amidon de maïs |
| | 38,00 % d'engrais complets Triabon (BASF) |
| | 40,00 % de kaolin et |
| environ | 11,00 % d'eau |
dans un malaxeur, puis on presse le mélange dans une extrudeuse en bâtonnets d'environ 6 mm de diamètre qu'on découpe à une longueur d'environ 4 cm et qu'on sèche pendant 6 heures à 40°C.

8. Utilisation de bâtonnets suivant la revendication 8, pour la protection durable de plantes contre les dégâts causés par des insectes.
